# EUROPÄISCHE PATENTANMELDUNG

(11) **EP 3 951 524 A1**
(43) Veröffentlichungstag der Anmeldung: **09.02.2022**
(21) Anmeldenummer: 20189659.4
(22) Anmeldetag: 05.08.2020
(51) Int. Cl.: G05B 19/418

(54) **VERFAHREN ZUM BETRIEB EINES SYSTEMS UND SYSTEM GEKOPPELT MIT EINER ANZAHL VON PRODUKTIONSSTATIONEN ZUM HERSTELLEN EINES PRODUKTS**

(71) Anmelder: Siemens Aktiengesellschaft, 80333 München (DE)
(72) Erfinder: Böhm, Birthe, 90480 Nürnberg (DE)

(57) **Zusammenfassung**

Die Erfindung beansprucht ein System (100) gekoppelt mit einer Anzahl von Produktionsstationen (110 - 114) zum Herstellen (Produzieren) eines Produkts (105) in Abhängigkeit eines Produktionsplans umfassend eine Sequenz von Produktionsschritten (102 - 104), wobei jede der Produktionsstationen (110 - 114) eine Beschreibung (F110 - F114) von Fähigkeiten angibt, welche Produktionsschritte (102 - 104) mit der Produktionsstation (110 - 114) durchführbar sind,
- und mit einer Erfassungseinrichtung (E110-E113) zum Erfassen von Daten von eintretbaren Ereignissen, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirken kann,
- sowie mit einer Verarbeitungseinrichtung (130) zum Ermitteln zumindest eines Zustandes der wenigstens einen Fähigkeit mit Hilfe der Einflüsse, welcher repräsentiert, ob nach Eintritt zumindest eines solchen Ereignisses die wenigstens eine Fähigkeit der einen oder mehreren Produktionsstationen erhalten bleibt oder eingesetzt werden kann,
und mit einer Steuerungseinrichtung (105) zum Steuern des Betriebes der einen oder mehreren entsprechenden Produktionsstationen abhängig vom jeweiligen Zustand der wenigstens einen Fähigkeit geeignet ist.

## Beschreibung

Zukünftige industrielle Systeme sollen zunehmend autonom agieren und gemeinsam mit anderen intelligenten autonomen Systemen immer kompliziertere Aufgabenstellungen in einem Systemverbund lösen. Ein Beispiel für solche Systemverbünde sind Fabriken der Zukunft oder Industrie 4.0-Anlagen, die aus unabhängig agierenden Funktionseinheiten (z.B. Maschinen oder Produktionsstationen) aufgebaut sind, die mit dem Ziel der Fertigung eines Produktes kooperieren. Industrielle System- bzw. Anlagenverbünde können zukünftig auch virtuell z.B. über die Nutzung von virtuellen Marktplätzen gebildet werden. Z.B. kann zur Fertigung eines neuen Produktes eine spezielle Fertigungsfähigkeit bzw. Fertigkeit bzw. Fähigkeit, auch Skill genannt, benötigt werden, die nicht lokal in der bestehenden Produktionsanlage, sondern ggf. in einer anderen Produktionsanlage als in der bestehenden Produktionsanlage vernetzt ist. Um dieses Produkt dennoch herstellen zu können, können zukünftig über virtuelle Marktplätze Funktionseinheiten gesucht werden, die diese Fertigungsfähigkeiten besitzen und schließlich in den Produktionsprozess mit eingebunden werden. Insbesondere im Zuge der Individualisierung von Produkten kann dieser virtuell entstehende Systemverbund häufig notwendig werden. Dies bedeutet aber auch die Einbindung ggf. unbekannter Systeme, über die wenig bekannt ist und auf die kein direkter Zugriff besteht.

Eine automatisierte Integration neuer Systeme bzw. Funktionseinheiten in einen Systemverbund erfolgt üblicherweise nicht. Dies wird allerdings in der Zukunft vermehrt erwartet, z.B. auch bei der Nutzung virtueller Marktplätze für industrielle Systeme und deren Fertigungsfähigkeiten.

Im Industrie-4.0-Anwendungsszenario "Auftragsgesteuerte Produktion" wird dafür für industrielle Produktionsanlagen eine Selbstbeschreibung der Produktionsfähigkeiten durch die beteiligten Produktionsmittel oder Produktionssysteme z.B. Produktionsstationen bzw. -maschinen gefordert, anhand derer die für einen Produktionsauftrag benötigten Fähigkeiten identifiziert und gemäß unterschiedlicher Optimierungskriterien ausgewählt werden können (z.B. Kosten, Zeit, Qualität). Sind alle benötigten Produktionsfähigkeiten vorhanden, dann kann der Produktionsauftrag angenommen und anschließend mithilfe der Produktionsmittel produziert werden.
Dies erfordert auch, dass für jedes geplante Produkt zunächst ein Produktionsprozess bzw. die notwendigen Produktionsfähigkeiten definiert werden - entweder z.B. durch das Produkt bzw. den Produktionsauftrag oder auch automatisiert durch ein System oder manuell durch einen Bediener bzw. Benutzer. Aufgrund dieses Produktionsprozesses bzw. der benötigten Produktionsfähigkeiten sucht sich nun entweder beispielsweise das Produkt seinen Weg durch die Produktionsstationen, ein zentrales System übernimmt die Produktionsplanung (ggf. mit manueller Unterstützung) oder das Roh- bzw. Halb-Produkt wird von den Systemen oder einem zentralen System innerhalb der Produktionsanlage an das jeweils nächste System geschickt, das mindestens den nächsten erforderlichen Produktionsschritt ausführen kann. In jedem Fall kommuniziert entweder das Produkt bzw. sein Digitaler Zwilling mit anderen Systemen oder die Systeme kommunizieren untereinander, um die Produktion des Produktes zu ermöglichen. Systeme in diesem Sinne können sowohl Produktionsmittel bzw. -stationen (z.B. Maschinen) sein als auch Engineering-Systeme, Leitsysteme, Manufacturing Execution Systeme (MES) usw. sein.

Insbesondere im Zuge der Individualisierung von Produkten ist dieses Anwendungsszenario sinnvoll, da im Extremfall für die Losgröße 1 mit möglichst geringem Aufwand geprüft werden muss, ob ein Produkt tatsächlich anhand der verfügbaren Produktionsfähigkeiten herstellbar ist und anschließend auch produziert werden kann, ohne dass bereits zum Planungszeitpunkt der Anlage alle Produkte bekannt sind, die später damit gefertigt werden sollen. Im Extremfall kann eine Industrie 4.0-Anlage Systeme beinhalten, die unterschiedliche Produktionsfähigkeiten (z.B. Bohren oder Fräsen für ausgewählte Materialien) zur Verfügung stellen, die flexibel für die Herstellung unterschiedlichster Produkte genutzt werden können.

Individuelle Produkte mit geringen Losgrößen erfordern im Allgemeinen möglichst veränderungsfähige Anlagen (z.B. einfache Integration neuer Systeme und schnelle Umkonfiguration sowie zahlreiche Produktionsfähigkeiten) und eine flexible Nutzung der vorhandenen Systeme für die Realisierung individueller Produktionsprozesse. Darüber hinaus können weitere, externe Systeme mit eingebunden werden (z.B. über virtuelle Marktplätze, wie oben beschrieben), um weitere Produktionsfähigkeiten zur Verfügung zu stellen.

Aus PCT/US2016/046226 ist ein Cyber-physikalisches Produktionssystem bekannt, das eine cyberphysikalische Produktionseinheit mit einem Automatisierungssystemgerät, einer Netzwerkschnittstelle, die Fähigkeits-Instanzen empfangen kann, und einen Prozessor aufweist, der die Fähigkeits-Instanzen ausführt, um Verhalten anzuwenden, welches das Automatisierungssystemgerät kontrolliert. Die Fähigkeits-Instanz liefert eine maschinen-unabhängige Anfrage zum Verwandeln eines Arbeitsstückes durch das Automatisierungssystemgerät.

Aus EP 3 428 752 A1 ist ein Verfahren zum Initialisieren einer Fertigungsstation eines Fertigungsverbunds zur Fertigung eines Produkts bekannt, mit den Schritten:
- Erfassen von zumindest einem Arbeitsschritt, welcher durch die Fertigungsstation zur Fertigung durchzuführen ist,
- Erfassen einer Fertigungsfähigkeit zumindest eines der Fertigungsstation untergeordneten Fertigungsmittels,
- Ermitteln, ob eine Durchführbarkeit des zumindest einen Arbeitsschritts mittels der Fertigungsfähigkeit des zumindest einen Fertigungsmittels gegeben ist,
- Ausgeben eines Signals, welches die Durchführbarkeit des zumindest einen Arbeitsschritts charakterisiert, zum Initialisieren der Fertigungsstation.

In PCT/EP2019/073702 ist ein Automatisierungssystem mit einer Anzahl von Produktionsanlagen zum automatischen Herstellen eines Produkts in Abhängigkeit eines Produktionsplans umfassend eine Sequenz von Produktionsschritten schon vorgeschlagen worden, wobei jeder der Produktionsanlagen eine Fähigkeiten-Beschreibung, die angibt, welche Produktionsschritte mit der Produktionsanlage durchführbar sind, und eine Erfassungseinrichtung zum Erfassen von Produktionsdaten zugeordnet ist, mit einer Überprüfungseinheit zum Überprüfen der Fähigkeiten-Beschreibung in Abhängigkeit der erfassten Produktionsdaten und zum Ausgeben eines Überprüfungsergebnisses, und mit einer Anpassungseinheit zum Anpassen der Fähigkeiten-Beschreibung in Abhängigkeit des Überprüfungsergebnisses.

Das eingangs erläuterte Konzept des sogenannten Skill-based Engineerings betrifft hauptsächlich die Produktionsplanung sowie die Produktionssteuerung, wenn die Produkte unter Inanspruchnahme der vorhandenen Produktionsfähigkeiten tatsächlich produziert werden.
Skills entsprechen einer funktionalen Beschreibung der Produktionsfähigkeiten auf Ebene des Produktionsprozesses und entkoppeln von der technischen Lösung sowie der Hardware. D.h. es wird z.B. eine Fähigkeit "Transport" mit einem Ziel definiert und angewandt, unabhängig von der technischen Umsetzung dieser Transportfähigkeit z.B. über ein Transportband, eine Hängebahn oder ggf. sogar einen manuellen Transport durch Werksbeschäftigte.

Relevant ist dabei nicht nur die grundsätzliche Verfügbarkeit der Produktionsfähigkeiten, sondern auch die aktuelle oder auch für einen Zeitpunkt prognostizierte Verfügbarkeit, die z.B. durch Systemausfälle beeinflusst werden kann.

Beispielsweise werden Alarme bei Systemausfällen üblicherweise der Hardware bzw. den technischen Lösungsbausteinen zugeordnet, die oft deutlich detailliertere Funktionen als Produktionsfähigkeiten sind. Über Hierarchisierungen wie Technologische Hierarchien werden diese Alarme ggf. auch Produktionsstationen oder Teilanlagen zugeordnet, welche Produktionsfähigkeit tatsächlich gestört ist oder ob überhaupt eine Störung der Produktion vorliegt, lässt sich üblicherweise nur mit Wissen aus den Alarmen ableiten bzw. kann heute über eine Klassifizierung oder Beschreibung der Alarme erfolgen (z.B. Warnung, Fehler). Beispielsweise stellen Diagnosesysteme üblicherweise den Zustand der Hardware dar, d.h. sie zeigen für jedes System die aktuellen Fehlermeldungen oder Alarme an. Welchen Einfluss diese Fehlermeldungen bzw. Störung auf die Produktionsfähigkeiten einer Anlage hat, muss der Bediener der Anlage heute üblicherweise aus seinem Wissen über die Anlage ableiten. Hilfestellung bekommt er normalerweise über eine Hardware-Hierarchie oder auch eine Zuordnung der Meldungen zu Technologischen Hierarchien.

Es ist Aufgabe der Erfindung, ein Automatisierungssystem bereitzustellen, das die Steuerung des Betriebes einer oder mehrerer Produktionsstationen bei möglichen Störeinflüssen oder gar Systemausfällen verbessert.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein System gekoppelt mit einer Anzahl von Produktionsstationen zum Herstellen bzw. Produzieren eines Produkts in Abhängigkeit eines Produktionsplans umfassend eine Sequenz von Produktionsschritten, wobei jede der Produktionsstationen eine Beschreibung von Fähigkeiten angibt, welche Produktionsschritte mit der Produktionsstation durchführbar sind,
- und mit einer Erfassungseinrichtung zum Erfassen von Daten von eintretbaren Ereignissen, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirken kann,
- sowie mit einer Verarbeitungseinrichtung zum Ermitteln zumindest eines Zustandes der wenigstens einen Fähigkeit mit Hilfe der Einflüsse, welcher repräsentiert, ob nach Eintritt zumindest eines solchen Ereignisses die wenigstens eine Fähigkeit der einen oder mehreren Produktionsstationen erhalten bleibt oder (wieder) eingesetzt werden kann,
- und mit einer Steuerungseinrichtung zum Steuern des Betriebes der einen oder mehreren entsprechenden Produktionsstationen abhängig vom jeweiligen Zustand der wenigstens einen Fähigkeit geeignet ist.

Das System kann hierbei ein Automatisierungssystem sein, das mehrere Produktionsstationen umfasst. Es ist auch möglich, dass das System übergeordnet mit Produktionsstationen in Form von Produktionsanlagen gekoppelt ist und dabei noch weitere Systeme einbinden kann. Weitere Systeme könnten ein Wartungssystem oder auch ein Diagnosesystem für die Einflüsse auf die Fähigkeit sein. Gekoppelt kann auch als integriert verstanden werden. Es kann eine direkte Anbindung oder eine sogenannte Remote-Anbindung mit der Kopplung vorgesehen sein. Diese Anbindung kann dabei drahtgebunden oder auch drahtlos über gängige Netzwerktechnologien wie Funk (GSM, 3G, 4G, 5G, Wifi, Zigbee, Bluetooth, NFC) sein.

Die Verarbeitungseinheit ist vorzugsweise dazu eingerichtet, eine Gesamtsicht über alle Fähigkeiten zusammenzustellen und gegebenenfalls für eine graphische Darstellung dieser Gesamtsicht aufzubereiten.

Der Vorteil besteht darin, dass die Darstellung der Auswirkungen bzw. Beeinträchtigungen bzw. auch Störungen der Produktionsfähigkeiten aufzeigt sowie die Nutzung der Modellierung von Einflüssen auf Produktionsfähigkeiten für Wartungsplanung und deren Integration in die Produktionsplanung genutzt werden kann.

Die Steuerungseinrichtung ist vorzugsweise dazu ausgelegt, mit Hilfe der Gesamtsicht und der erfassten Daten von eintretbaren Ereignissen und deren Einflüsse zudem kritische Stellen im Zusammenwirken der Produktionsschritte kenntlich zu machen. Gegebenenfalls kann dadurch eine Markierung in der graphischen Darstellung bewirkt werden. Diese Darstellung ist dabei besonders benutzerfreundlich und kann gegebenenfalls auch automatisiert analysiert und diagnostiziert werden. Durch das Kenntlichmachen der kritischen Stellen können auch Nachrichten an andere Systeme bzw. Servicepersonal eingeleitet werden, um damit z.B. eine Wartung anzustoßen.

Diese Ereignis-abhängigen Einflüsse können in einer Wissensbasis bzw. Wissensspeicher durch zumindest eine Benutzerinteraktion und/oder durch ein (trainierbares) Lernsystem modellierbar und/oder modelliert sein.

Das System kann eine Überprüfungseinheit umfassen, welche dazu eingerichtet ist, die erfassten Daten von eintretbaren Ereignissen und die davon abhängigen Einflüsse auf Konsistenz und/oder Vollständigkeit zu überprüfen und das Überprüfungsergebnis gegebenenfalls auszugeben. Somit können die Daten plausibilisiert werden.

Die Gesamtsicht und/oder die kritischen Stellen kann eine Benutzerinteraktion herbeiführen oder - wie oben erwähnt - automatisiert erkannt werden und zu Reaktionen führen.

Als Reaktion auf eine solche Benutzerinteraktion ist es möglich, dass das Steuern des Betriebs der einen oder mehreren entsprechenden Produktionsstationen ausgelöst werden kann. Als Reaktion auf eine solche Benutzerinteraktion kann eine die Fähigkeit der einen oder mehreren entsprechenden Produktionsstationen wieder herstellende und/oder erhaltende Maßnahme eingeleitet werden.

Sinnvollerweise ist eine Ausgabeeinheit vorgesehen, welche dazu ausgelegt ist, wenigstens ein Signal und/oder wenigstens eine Nachricht, welches und/oder welche einen Zustand der wenigstens einen Fähigkeit charakterisiert und gegebenenfalls eine solche Steuerung des Betriebes der einen oder mehreren entsprechenden Produktionsstationen einleitet.

Ein weiterer Aspekt der Erfindung ist ein Verfahren zum Betrieb eines Systems gekoppelt mit einer Anzahl von Produktionsstationen zum Herstellen eines Produkts in Abhängigkeit eines Produktionsplans umfassend eine Sequenz von Produktionsschritten, wobei jede der Produktionsstationen eine Beschreibung von Fähigkeiten angibt, welche Produktionsschritte mit der Produktionsstation durchführbar sind, aufweisend folgende Schritte:
- Erfassen von Daten von eintretbaren Ereignissen, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirkt,
- Ermitteln zumindest eines Zustandes der wenigstens einen Fähigkeit mit Hilfe der Einflüsse, welcher repräsentiert, ob nach Eintritt zumindest eines solchen Ereignisses die wenigstens eine Fähigkeit der einen oder mehreren Produktionsstationen erhalten bleibt oder eingesetzt werden kann, und
- Steuern des Betriebes der einen oder mehreren entsprechenden Produktionsstationen abhängig vom jeweiligen Zustand der wenigstens einen Fähigkeit.

Die vorliegende Erfindung betrifft ferner ein Verfahren sowie ein Computerprogrammprodukt.

Das Computerprogrammprodukt umfassend computerausführbare Anweisungen, welche, wenn in ein Gerät (z.B. Computer) geladen, zur Durchführung eines Verfahrens nach der oben genannten Art und Ausführungsformen ausgelegt sind.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einem Gerät/Modul bzw. Vorrichtung der vorstehend genannten Art ablaufen oder als Computerprogrammprodukt auf einem computerlesbaren Medium gespeichert sein.

Das Verfahren bzw. das Computerprogramm(produkt) kann entsprechend der Weiterbildungen/Ausführungsformen der vorgenannten Systeme, Einheiten, Vorrichtungen, Einrichtungen bzw. Geräte, Module und deren Weiterbildungen/Ausführungsformen und umgekehrt ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Es zeigen:
- Figur 1: zeigt ein schematisches Blockschaltbild einer Ausführungsform eines Automatisierungssystems,
- Figur 2: ein Diagramm auf Typebene zu Systemen, Produktionsfähigkeit und Ereignis,
- Figur 3: eine Beziehung zwischen zwei Systemen und
- Figur 4: Einflüsse auf Produktionsstationen und System zur Analyse der Produktionsfähigkeiten.

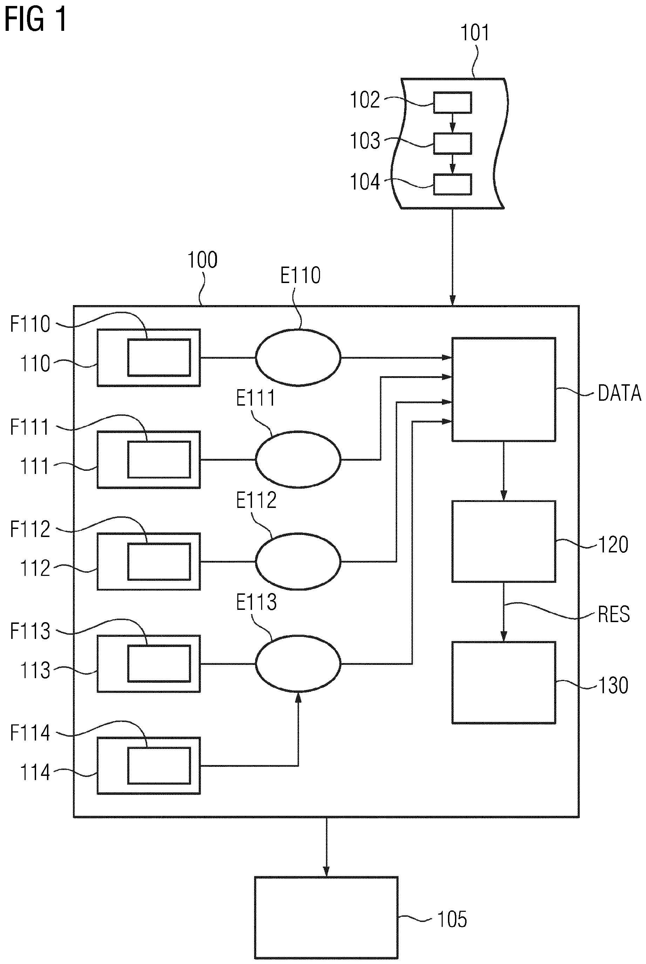

Fig. 1 zeigt ein schematisches Blockschaltbild einer Ausführungsform eines Automatisierungssystems 100, welches beispielhaft fünf Produktionsstationen 110 - 114 aufweist, wobei deren Anzahl nicht auf genau fünf beschränkt ist. Beispielsweise ist das Automatisierungssystem 100 zum automatischen Herstellen eines Produktes beispielsweise Schrauben eingerichtet. Hierzu umfasst es eine Säge 110, ein Stanzgerät 111, eine Fräse 112 und zwei Drehmaschinen 113, 114, die beispielsweise für unterschiedliche Durchmesser von Schrauben geeignet sind. Produktionsstationen können auch Produktionsanlagen sein. Dann kann anstatt eines Automatisierungssystem ein übergeordnetes System, das cyber-physikalisch ausgeprägt sein kann, eingesetzt werden.

Jede Produktionsstation 110 - 114 ist eine Fähigkeiten-Beschreibung F110 - F114 zugeordnet. Eine jeweilige Fähigkeiten-Beschreibung F110 - F114 liegt beispielsweise in Form einer Tabelle oder in einer hierarchischen Textform vor. Dabei kann für eine jeweilige Fähigkeiten-Klasse, beispielsweise "Sägen", "Bohren", "Fräsen", "Stanzen" und dergleichen ein eigenes Tabellenblatt oder ein eigener Abschnitt vorgesehen sein. Die einzelnen Felder oder Einträge weisen vorzugsweise eine eindeutige Kennung auf. Die Fähigkeiten-Beschreibung F110 der Säge 110 enthält beispielsweise in einer Fähigkeiten-Klasse "Sägen" Angaben zu einer maximal möglichen Materialstärke, einer maximalen Materialhärte, einer Schnittbreite, sowie einer Dauer für einen Sägeschnitt, wobei diese von den vorgenannten Parametern abhängt. Die Fähigkeiten-Beschreibung F112 der Fräse 112 enthält in einer Fähigkeiten-Klasse "Fräsen" entsprechende Angaben zu Parametern, die für den Betrieb der Fräse 112 relevant oder von Interesse sind und enthält beispielsweise in einer Fähigkeiten-Klasse "Bohren" weitere entsprechende Angaben. Die Fähigkeiten-Beschreibungen F113, F114 der Drehmaschinen 113, 114 enthalten in einer Fähigkeiten-Klasse "Drehen" Angaben zu einstellbaren Drehzahlen, möglichen Gewindeformen, maximale Materialhärten, Toleranzen, Produktionszeiten und weitere Parameter, die für den Betrieb der Drehmaschinen 113, 114 von Interesse sind. Die Fähigkeiten-Beschreibungen F110 - F114 sind insbesondere so detailliert, dass eine Produktionsplanung in Abhängigkeit der Fähigkeiten-Beschreibungen F110 - F114 möglich ist.

Zum Herstellen eines Produkts, beispielsweise eines bestimmten Schraubentyps, wird ein Produktionsplan 101 mit Produktionsschritten 102 - 104 bereitgestellt. In dem Produktionsschritt 102 wird beispielsweise ein zylinderförmiges Metallstück mit einer bestimmten Länge und mit einem bestimmten Durchmesser hergestellt. Dies kann vorliegend die Säge 110 übernehmen, wobei beispielsweise als Ausgangsmaterial Metallstangen mit unterschiedlichen Durchmessern vorrätig sind. In dem Produktionsschritt 103 wird ein Gewinde in einen Teil der zylinderförmigen Metallstücke geschnitten, was je nach Durchmesser eine der beiden Drehmaschinen 113, 114 übernehmen kann. In dem Produktionsschritt 104 wird ein Schraubenkopf an einem Ende des mit dem Gewinde versehenen Metallstücks geformt, was beispielsweise die Fräse 112 übernehmen kann. Bei der Produktion, das heißt bei der Ausführung der einzelnen Produktionsschritte 102 - 104 durch die jeweilige Produktionsstation 110 - 114, erfassen die Erfassungseinrichtungen E110 - E113 jeweils die Daten von eintretbaren Ereignissen.

Die Zuordnung der einzelnen Produktionsschritte 102 - 104 des Produktionsplans 101 zu den Produktionsstationen 110 - 114 kann manuell durch einen Operator bzw. Benutzer, teilautomatisch und vorzugsweise vollautomatisch erfolgen. Hierbei wird insbesondere ein "Skill-Matching" basierend auf den Fähigkeiten-Beschreibungen F110 - F114 durchgeführt.

Das Automatisierungssystem 100 weist weiterhin vier Erfassungseinrichtungen E110 - E113 auf, die den Produktionsstationen 110 - 114 zugeordnet sind. Dabei ist die Erfassungseinrichtung E113 beiden Drehmaschinen 113, 114 zugeordnet. Diese Erfassungseinrichtungen können auch in einer nicht dargestellten "zentralen" Erfassungseinrichtung integriert sein. Die Erfassungseinrichtungen E110 - E113 sind zum Erfassen von Daten DATA von eintretbaren Ereignissen eingerichtet, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirken kann.

Diese Ereignisse haben Einfluss auf ggf. mehrere Produktionsfähigkeiten, wobei die Ereignisse sowohl einen Beginn als ein Ende haben können. Die Art des Einflusses kann durch den Parameter "Einfluss" angegeben werden (z.B., Ausfall, Qualitätsbeeinträchtigung), weitere Parameter können ebenfalls übergeben werden, die z.B. die Art der Qualitätsbeeinträchtigung genauer spezifizieren.

Diese Ereignis-abhängigen Einflüsse können in einer nicht dargestellten Wissensbasis bzw. Wissensspeicher durch zumindest eine Benutzerinteraktion und/oder durch ein trainierbares Lernsystem modelliert werden.

Beispielsweise kann ein Ereignis "Wartung Bohrfutter" auslösen, das Einfluss auf die Produktionsfähigkeit "Bohren" hat. Dieser Einfluss beginnt z.B. zu einem Zeitpunkt t1 und endet zu einem Zeitpunkt t2. Währenddessen fällt die Produktionsfähigkeit "Bohren" aus. Diese Auswirkung auf die Bohrfähigkeit könnte eine Auswirkung auf den Produktionsschritt 103 haben, wenn "Bohren" z.B. im Produktionsschritt 103 benötigt wird. Auch könnte im Beispiel auch der Produktionsschritt 104 beeinträchtigt sein. Ein Ereignis "Verschleiß Bohrfutter" kann die Auswirkung haben, dass nur ein bestimmter Bohrer einer bestimmten Größe zur Verfügung steht, jedoch ein Bohrer einer anderen Größe nicht vom verschlissenen Bohrfutter aufgenommen werden kann. Dann wäre die Bohrfähigkeit begrenzt, jedoch kein Totalausfall. Im Beispiel könnte dieses Ereignis einen Einfluss auf den Produktionsschritt 103 haben, jedoch nicht auf Produktionsschritt 104.

Solche Ereignisse und deren Auswirkungen auf Produktionsfähigkeit und letztlich Auswirkungen auf einen oder mehrere Produktionsschritte könnte in einer Gesamtsicht graphisch dargestellt werden. Dabei können kritische Stellen deren Wirkung auf die Produktionsschritte kenntlich gemacht werden. Gegebenenfalls kann dies in der graphischen Darstellung markiert werden. Diese kritischen Stellen können eine Benutzerinteraktion herbeiführen. Als Reaktion auf eine solche Benutzerinteraktion kann der Betrieb der einen oder mehreren entsprechenden Produktionsstationen wieder aufgenommen werden.

Optional können mittels einer Überprüfungseinheit 120 die erfassten Daten von eintretbaren Ereignissen und die davon abhängigen Einflüsse auf Konsistenz und/oder Vollständigkeit überprüft und das Überprüfungsergebnis (RES) gegebenenfalls ausgegeben werden.

Eine Verarbeitungseinrichtung 130 ist dazu eingerichtet, um zumindest einen Zustand der wenigstens einen Fähigkeit mit Hilfe der Einflüsse zu ermitteln. Dieser repräsentiert, ob nach Eintritt zumindest eines solchen Ereignisses die wenigstens eine Fähigkeit der einen oder mehreren Produktionsstationen erhalten bleibt.

Wenigstens ein Signal und/oder wenigstens eine Nachricht, welches und/oder welche den ermittelten Zustand der wenigstens einen Fähigkeit charakterisiert, kann mittels einer nicht dargestellten Ausgabeeinheit ausgegeben werden. Dieses Signal bzw. diese Nachricht kann gegebenenfalls eine Steuerung des Betriebes der einen oder mehreren entsprechenden Produktionsstationen einleiten.

Mit einer Steuerungseinrichtung 105, die innerhalb des Automatisierungssystems oder außerhalb desselben angeordnet sein kann, kann der Betrieb der einen oder mehreren entsprechenden Produktionsstationen abhängig vom jeweiligen Zustand der wenigstens einen Fähigkeit gesteuert werden. Dieses Signal bzw. diese Nachricht kann gegebenenfalls an die Steuerungseinrichtung 105 zur Steuerung des Betriebes der einen oder mehreren entsprechenden Produktionsstationen geleitet werden.

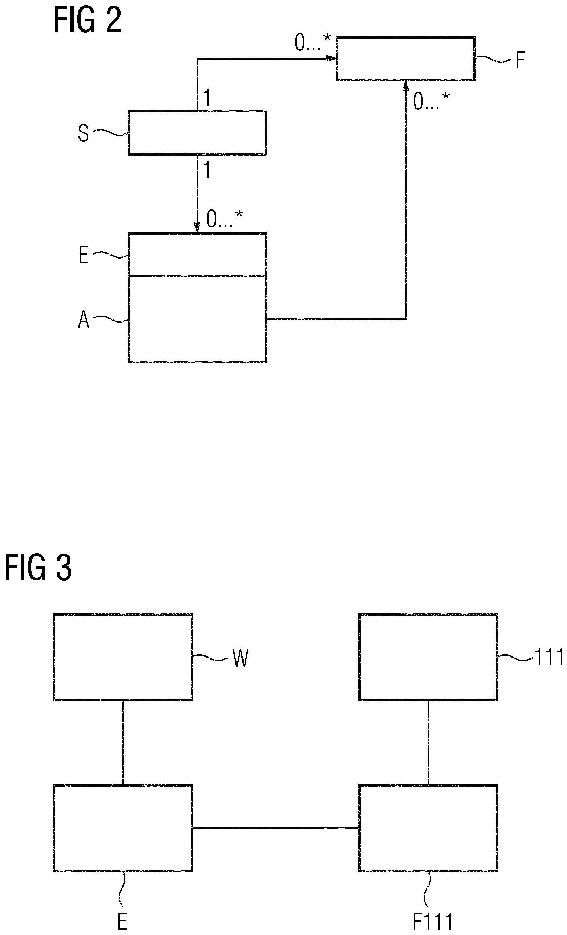

In Figur 2 ist ein mögliches Modell dargestellt, das auf einer Typebene die Beziehungen zwischen Produktionsstationen, die beispielsweise als Softwareanwendung S ausgebildet sind, ihren Produktionsfähigkeiten F und möglichen Ereignissen E zeigt, die in diesem Modell generiert werden. Dabei kann auch eine Software-Anwendung S eine Produktionsstation sein. Eine Produktionsstation kann mehrere Produktionsfähigkeiten F sowie Ereignisse E haben, das durch die 1 zu 0...* Beziehungspfeile ausgedrückt wird. Diese Ereignisse E haben Einfluss auf ggf. mehrere Produktionsfähigkeiten F, wobei die Ereignisse als Attribute A sowohl einen Beginn als ein Ende haben können. Die "Art des Einflusses" kann durch den Attribut-Parameter "Einfluss" angegeben werden (z.B., Ausfall, Qualitätsbeeinträchtigung), weitere Attribut-Parameter können ebenfalls übergeben werden, die z.B. die Art der Qualitätsbeeinträchtigung genauer spezifizieren. Hat ein Ereignis unterschiedliche Auswirkungen auf unterschiedliche Produktionsfähigkeiten, so kann dies unter Nutzung des Modells in Form mehrerer Ereignisse abgebildet werden. Andere Modellierungen sind möglich, die für jede Produktionsfähigkeit die Einflussart und deren Attribut-Parameter getrennt ausweisen.

Figur 3 zeigt beispielhaft eine Beziehung zwischen zwei Systemen, einer Produktionsstation 111 und einem Wartungssystem W. Das Wartungssystem kann ein Ereignis E "WartungBohrfutter" auslösen, das wiederum Einfluss auf die Produktionsfähigkeit F111 "Bohren" hat. Dieser Einfluss beginnt z.B. zu einem Zeitpunkt t1 und endet zu einem Zeitpunkt t2. Während dessen fällt die Produktionsfähigkeit F111 "Bohren" aus.

Möglichst alle Systeme, die Einflüsse auf eine Produktionsfähigkeit haben oder diese feststellen können, sollten solche Ereignisse erzeugen. Je mehr Einflüsse erfasst werden, desto genauer ist die Gesamtsicht auf den tatsächlichen und zukünftigen Zustand des Systems und/oder auf die einzelnen Produktionsstationen. Dabei sollten die Einflüsse möglichst zeitnah erfasst werden.

Im Betrieb werden für jede Produktionsfähigkeit alle Einflüsse auf diese durch alle Produktionsstationen gesammelt, entsprechend aggregiert und ggf. in einer Gesamtsicht dargestellt. Ein System kann dann die Verfügbarkeit der Produktionsfähigkeiten zum aktuellen Zeitpunkt oder auch auf einer Zeitleiste darstellen sowie die Nachfrage nach dieser Produktionsfähigkeit, falls vorhanden (z.B. als Gantt-Diagramm). Dabei können auch zukünftige Störungen (z.B. durch geplante Wartungen) angezeigt werden, die dann gesondert kenntlich gemacht werden können oder entlang einer Zeitleiste dargestellt werden können. Diese Darstellung und auch die nachfolgende Analyse kann je nach Ziel zentral z.B. in der Verarbeitungseinheit für alle Produktionsstationen eines Systems oder dezentral durch jede Produktionsstation erfolgen. Auf dieser Basis kann dann dieses System eine sinnvolle Reaktion vorschlagen.

Im Betrieb des Systems kann eine solche Darstellung für den Operator erfolgen statt einer reinen Darstellung der Meldungen. Dem Operator wird so jederzeit eine Übersicht über die Betriebsfähigkeit des Systems gegeben und ihm werden mit dem Eintreten von Ereignissen sofort die Auswirkungen dieser Ereignisse dargestellt. Werden diese noch anhand der aktuellen Produktionsaufträge priorisiert, so kann der Operator entsprechend reagieren und sofort und zielgerichtet die Maßnahmen ergreifen, die die für die aktuellen oder nächsten Produktionsaufträge benötigten Fähigkeiten wiederherstellen.

Auf einen Blick ist somit der Zustand einer Produktionsfähigkeit oder des gesamten Systems ersichtlich, sowie die Ereignisse, die zu diesem Zustand geführt haben. Eine weitere Verknüpfung von Produktionsfähigkeiten zur zugrundeliegenden Produktionsstation ist für eine Fähigkeits-Diagnose sinnvoll und kann ebenfalls aus dem Modell der Figur 2 abgeleitet werden.

Für Service und Wartung können die aktuellen oder zukünftigen Beeinträchtigungen von Produktionsfähigkeiten für eine sinnvolle Abarbeitung priorisiert werden auf Basis definierter Kriterien: Wird eine Produktionsfähigkeit zeitnah benötigt, so kann sie z.B. im Fehlerfall hochprior berücksichtigt werden. Auch vorbeugende Wartungen können entsprechend der Wichtigkeit der Produktionsfähigkeiten priorisiert werden. Eine integrierte Gesamtsicht aller Ereignisse für eine Produktionsfähigkeit ermöglicht außerdem alle notwendigen Arbeiten für eine Produktionsfähigkeit darzustellen und diese gemeinsam zu planen und durchzuführen.

Sowohl für die Diagnose als auch für Service und Wartung können auch Einzel-Produktionsstationen ihre Produktionsfähigkeiten sowie die Einflüsse darauf unabhängig voneinander darstellen, um z.B. eine Möglichkeit für den Servicetechniker vor Ort anzubieten, nur eine Produktionsstation zu betrachten.

Eine Integration mit einer allgemeinen Produktionsplanung ist sinnvoll. In diesem Fall können auch die für die Herstellung von Produkten benötigten Produktionsfähigkeiten als Einflüsse auf die Produktionsfähigkeiten modelliert werden, in diesem Fall nicht als Störung, sondern als Belegung der Fähigkeiten. Damit ist zugleich auch ein Abgleich z.B. zwischen Wartungsaktivitäten und Produktionsplanung möglich. Darüber hinaus können auch weitere Service- und Wartungsinformationen mit den Ereignissen verknüpft werden, d.h. z.B. welche Fehlerbehebungen oder Wartungsarbeiten erfolgen müssen und wie diese durchgeführt werden sollen.

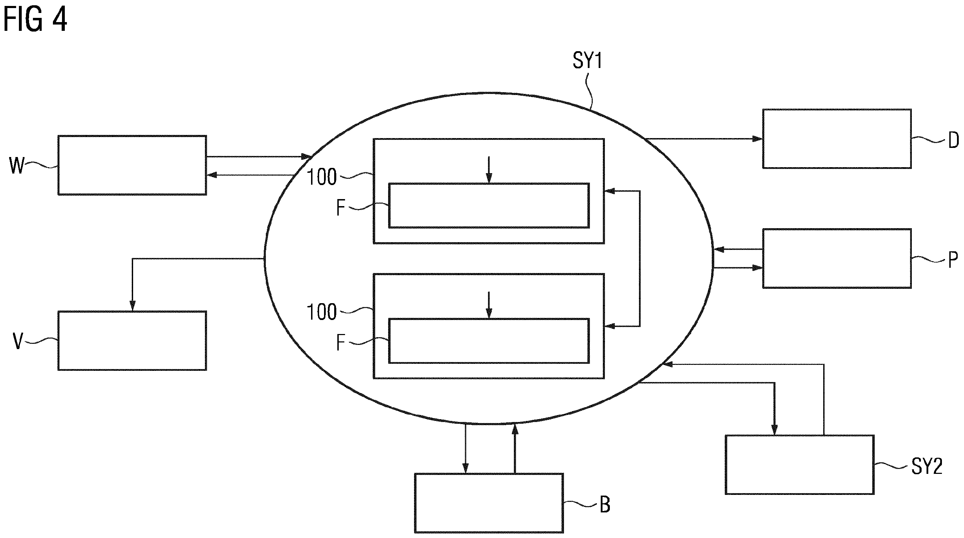

Figur 4 zeigt beispielhaft ein System SY1, das ein oder mehrere Automatisierungssysteme 100 der in Figur 1 erläuterten Art aufweisen kann.

Es kann hierbei mögliche Einflüsse auf Produktionsfähigkeiten F durch die eigenen oder andere Produktionsstationen sowie eine mögliche Nutzung der Daten zu den Produktionsfähigkeiten F für Einflüsse auf bzw. Analysen von anderen Systemen SY2 geben.

Neben der Diagnose durch ein Diagnosesystem D und der Einplanung von durch ein Wartungssystem W durchzuführenden Wartungsaktivitäten in die Produktionsplanung durch ein Planungssystem P kann eine Analyse der Störungen auch zu einer zielgerichteten Verbesserung und Modernisierung eines solchen Systems SY1 durch ein Verbesserungssystem V beitragen. Häufig beeinträchtigte Produktionsfähigkeiten können im Hinblick auf die Verursacher der Störungen analysiert werden: Diese Verursacher sind dabei insbesondere für Verbesserungen und Modernisierungen relevant. Umgekehrt können auch häufig gestörte Produktionsfähigkeiten mehrfach bzw. redundant vorgesehen werden oder durch z.B. neue Produktionsstationen mit identischen Produktionsfähigkeiten ersetzt werden.

Alle Einflüsse auf die Produktionsfähigkeiten werden gesammelt und z.B. auf einem Bediengerät B sichtbar dargestellt. Dabei können Gegenmaßnahmen entsprechend der aktuellen Auftragslage priorisiert werden. Darüber hinaus können die Einflüsse ebenfalls für Überprüfungen des Systems genutzt werden, da die Verfügbarkeit der Produktionsfähigkeiten dargestellt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das System bzw. auch Funktionseinheiten kann/können ein oder mehrere Prozessoren aufweisen. Der Begriff "Prozessor", "zentrale Signalverarbeitung", "Steuereinheit" oder "Datenauswertemittel" umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungseinheiten. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. System (100) gekoppelt mit einer Anzahl von Produktionsstationen (110 - 114) zum Herstellen (Produzieren) eines Produkts (105) in Abhängigkeit eines Produktionsplans umfassend eine Sequenz von Produktionsschritten (102 - 104), wobei jede der Produktionsstationen (110 - 114) eine Beschreibung (F110 - F114) von Fähigkeiten angibt, welche Produktionsschritte (102 - 104) mit der Produktionsstation (110 - 114) durchführbar sind,
- und mit einer Erfassungseinrichtung (E110-E113) zum Erfassen von Daten von eintretbaren Ereignissen, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirken kann,
- sowie mit einer Verarbeitungseinrichtung (130) zum Ermitteln zumindest eines Zustandes der wenigstens einen Fähigkeit mit Hilfe der Einflüsse, welcher repräsentiert, ob nach Eintritt zumindest eines solchen Ereignisses die wenigstens eine Fähigkeit der einen oder mehreren Produktionsstationen erhalten bleibt oder eingesetzt werden kann,
- und mit einer Steuerungseinrichtung (105) zum Steuern des Betriebes der einen oder mehreren entsprechenden Produktionsstationen abhängig vom jeweiligen Zustand der wenigstens einen Fähigkeit geeignet ist.

2. System nach dem vorhergehenden Anspruch, **dadurch gekennzeichnet, dass** die Verarbeitungseinheit dazu eingerichtet ist, eine Gesamtsicht über alle Fähigkeiten zusammenzustellen und gegebenenfalls für eine graphische Darstellung dieser Gesamtsicht aufzubereiten.

3. System nach dem vorhergehenden Anspruch, **dadurch gekennzeichnet, dass** die Steuerungseinrichtung dazu ausgelegt ist, mit Hilfe der Gesamtsicht und der erfassten Daten von eintretbaren Ereignissen und deren Einflüsse zudem kritische Stellen im Zusammenwirken der Produktionsschritte kenntlich zu machen.

4. System nach einem der vorhergehenden Ansprüche, **dadurch gekennzeichnet, dass** diese Ereignis-abhängigen Einflüsse in einer Wissensbasis durch zumindest eine Benutzerinteraktion und/oder durch ein Lernsystem modellierbar und/oder modelliert sind.

5. System nach einem der vorhergehenden Ansprüche,
**dadurch gekennzeichnet, dass** das System eine Überprüfungseinheit umfasst, welche dazu eingerichtet ist, die erfassten Daten von eintretbaren Ereignissen und die davon abhängigen Einflüsse auf Konsistenz und/oder Vollständigkeit zu überprüfen und das Überprüfungsergebnis (RES) gegebenenfalls auszugeben.

6. System nach einem der vorhergehenden Ansprüche, **dadurch gekennzeichnet, dass** die Gesamtsicht und/oder die kritischen Stellen eine Benutzerinteraktion herbeiführen können.

7. System nach dem vorhergehenden Anspruch, **dadurch gekennzeichnet, dass** als Reaktion auf eine solche Benutzerinteraktion das Steuern des Betriebs der einen oder mehreren entsprechenden Produktionsstationen ausgelöst werden kann.

8. System nach einem der vorhergehenden Ansprüche 6 oder 7, **dadurch gekennzeichnet, dass** als Reaktion auf eine solche Benutzerinteraktion eine die Fähigkeit der einen oder mehreren entsprechenden Produktionsstationen wieder herstellende und/oder erhaltende Maßnahme eingeleitet werden kann.

9. System nach einem der vorhergehenden Ansprüche **dadurch gekennzeichnet, dass** dieses eine Ausgabeeinheit aufweist, welche dazu ausgelegt ist, wenigstens ein Signals und/oder wenigstens eine Nachricht, welches und/oder welche einen Zustand der wenigstens einen Fähigkeit charakterisiert und gegebenenfalls eine solche Steuerung des Betriebes der einen oder mehreren entsprechenden Produktionsstationen einleitet.

10. Verfahren zum Betrieb eines Systems (100) gekoppelt mit einer Anzahl von Produktionsstationen (110 - 114) zum automatischen Herstellen eines Produkts (105) in Abhängigkeit eines Produktionsplans umfassend eine Sequenz von Produktionsschritten (102 - 104), wobei jeder der Produktionsstationen (110 - 114) eine Beschreibung (F110 - F114) von Fähigkeiten angibt, welche Produktionsschritte (102 - 104) mit der Produktionsstation (110 - 114) durchführbar sind, aufweisend folgende Schritte:
- Erfassen von Daten von eintretbaren Ereignissen, wobei jeder Ereigniseintritt ein oder mehrere Einflüsse auf das Zusammenwirken der Produktionsschritte mit sich bringt und sich auf wenigstens eine Fähigkeit einer zumindest einen Teil der Produktionsschritte ausführenden Produktionsstation auswirkt,
- Ermitteln zumindest eines Zustandes der wenigstens einen Fähigkeit mit Hilfe der Einflüsse, welcher repräsentiert, ob nach Eintritt zumindest eines solchen Ereignisses die wenigstens eine Fähigkeit der einen oder mehreren Produktionsstationen erhalten bleibt oder eingesetzt werden kann, und
- Steuern des Betriebes der einen oder mehreren entsprechenden Produktionsstationen abhängig vom jeweiligen Zustand der wenigstens einen Fähigkeit.

11. Verfahren nach dem vorhergehenden Anspruch, **dadurch gekennzeichnet, dass** eine Gesamtsicht über alle Fähigkeiten zusammengestellt und gegebenenfalls für eine graphische Darstellung dieser Gesamtsicht aufbereitet wird.

12. Verfahren nach dem vorhergehenden Anspruch, **dadurch gekennzeichnet, dass** mit Hilfe der Gesamtsicht und der erfassten Daten von eintretbaren Ereignissen und deren Einflüsse zudem kritische Stellen im Zusammenwirken der Produktionsschritte kenntlich gemacht wird.

13. Verfahren nach einem der vorhergehenden Verfahrensansprüche, **dadurch gekennzeichnet, dass** die erfassten Daten von eintretbaren Ereignissen und die davon abhängigen Einflüsse auf Konsistenz und/oder Vollständigkeit überprüft und das Überprüfungsergebnis (RES) gegebenenfalls ausgegeben wird.

14. Verfahren nach einem der vorhergehenden Verfahrensansprüche, **dadurch gekennzeichnet, dass** die Gesamtsicht und/oder die kritischen Stellen eine Benutzerinteraktion herbeiführen können.

15. Verfahren nach einem der vorhergehenden Verfahrensansprüche **dadurch gekennzeichnet, dass** das wenigstens eine Signal und/oder wenigstens eine Nachricht einen Zustand der wenigstens einen Fähigkeit charakterisiert und gegebenenfalls eine solche Steuerung des Betriebes der einen oder mehreren entsprechenden Produktionsstationen einleitet.
